# EUROPEAN PATENT APPLICATION

(11) **EP 2 806 388 A1**
(43) Date of publication of application: **26.11.2014**
(21) Application number: 13168921.8
(22) Date of filing: 23.05.2013
(51) Int. Cl.: G06Q 20/38, G06Q 20/28

(54) **System for obtaining a download code for downloading a digital content and method for obtaining a download code for downloading a digital content using such a system**

(71) Applicant: Cartamundi Turnhout N.V., 2300 Turnhout (BE)
(72) Inventor: Nietvelt, Steven Karel Maria, 2300 Turnhout (BE)
(74) Representative: Plas, Axel Ivo Michel

(57) **Abstract**

The invention relates to system for obtaining a download code (10, 11, 12) for downloading a digital content, wherein said system comprises at least a first part (10a, 11a, 12a) of said download code (10, 11, 12) being applied onto a first item (1); and a complementary second part (10b, 11 b, 12b) of said download code (10, 11, 12) being applied onto a second item (2, 6), wherein said first and said second item (1, 2, 6) are combinable to bring said first and said second part (10a, 11 a, 12a; 10b, 11b, 12b) of said download code (10, 11, 12) together to obtain said complete download code (10, 11, 12). The invention furthermore relates to method for obtaining a download code (10, 11, 12) for downloading a digital content using such a system.

## Description

### Field of the Invention

The present invention generally relates to a system for obtaining a download code for downloading a digital content. This digital content comprises amongst others e-books, e-magazines, e-journals, e-comic strips, videos, songs, podcasts, audiobooks, television shows, games, training courses, software, virtual cards, etc. This digital content more specifically is downloadable onto any suitable computing device comprising amongst others a computer, a laptop, a tablet pc, a mobile phone, a smartphone, etc.

This system more specifically uses cards for obtaining a download code for downloading this digital content.

The present invention also relates to a method for obtaining a download code for downloading a digital content using such a system according to the invention.

### Background of the Invention

The way in which people consume media content such as books, magazines, journals, comic strips, music, videos, games, etc. has seriously changed in recent years. Instead of consuming these in physical format, each of these types of content is now more and more consulted in a digital format such as e-books, e-magazines, e-journals, e-comic strips, music as mp3-files, audio-visual programs in various forms of digital files, etc.

At present, download cards are already known that comprise a unique download code that gains the cardholder access to a download page to download the digital product. Once downloaded, the obtained digital product can be imported onto a digital player such as a music or video player or can be transmitted onto a CD, DVD, Blu-ray disc, etc.

Such download cards can have a code which is already pre-activated before being purchased at a pay desk. The disadvantage thereof is that such pre-activated cards have no or a limited anti-theft protection using known standard anti-theft protection systems such as security tags or other alarm systems.

Another type of download cards is described in WO 2009/032802. The download cards as disclosed therein allow downloading one or more digital media products but have not any value until purchased and activated at the pay desk in a point-of-sale. In one embodiment, the digital media product is content specific and is provided to allow acquisition of a particular collection of digital media assets upon activation. Each of the digital media products has its own associated unique code that, when activated, allows for the acquisition of the particular digital media product, e.g. songs, podcasts, videos, audiobooks, television shows and / or games. Hence, when a possessor of a unique code accesses a website, e.g. an online media store, that allows for the purchase of digital media assets, and enters the unique code using an appropriate interface, the possessor may acquire the digital files that are associated with the particular digital media assets effectively identified by the unique code. As such, the possessor is then able to download the digital media assets to his or her computer and / or digital audio / video player.

The advantage of such download cards is that, when these are stolen, the thief cannot use them to obtain the desired digital download content without the unique code present thereon being activated at the pay desk of the point-of-sale. The disadvantage thereof however is that, since this unique code has to be activated at the point-of-sale, the point-of-sale is obliged to have internet access to do this activation to enable the cardholder to download the digital content associated with this download card. A further disadvantage thereof is that the download code has to be kept inactive until activation thereof. Activation of the download code is done by scanning of the barcode, which is linked with the download code, through which the download code becomes active. Consequently, at each point-of-sale, a terminal is needed to activate the code of the download cards and an interface is necessary between these terminals and the download platform where the digital content can be downloaded allowing a direct coupling between a respective terminal and this download platform.

There consequently exists a need to provide a system for obtaining a download code for downloading a digital content with a simplified anti-theft-protection, wherein the point-of-sale does not necessarily need an internet connection to activate the download code on these download cards when selling these and does not necessarily needs different terminals being in connection with the download platform, and no software interface is needed between the retailers cash register system and the download platform.

### Summary of the Invention

According to a first aspect, the invention provides in a system for obtaining a download code for downloading a digital content, wherein said system comprises at least
- a first part of said download code being applied onto a first item; and
- a complementary second part of said download code being applied onto a second item,
wherein said first and said second item are combinable to bring said first and said second part of said download code together to obtain said complete (full, entire) download code.

When this system is applied for selling items such as download cards in a point-of-sale, this system has the advantage that the point-of-sale is not obliged to have a terminal to activate the download card there. This point-of-sale consequently does not necessarily need to be in the possession of an internet connection and one or more terminals that are directly connectable with the download platform to change the status of the download content in this download platform to downloadable.

In a point-of-sale, at least one of the items which is provided with a part of the download code is accessible by a purchaser, for instance is present in the store of the point-of-sale, and is subsequently purchasable at a pay desk of the point-of-sale. The one or more other items which are provided with the remaining part of the download code are then obtained at this pay desk, through which the combination of these items, or in other words bringing all parts of the download card together, allows the purchaser to obtain the complete download code.

Such a system provides in a much simpler anti-theft protection.

This system can also be applied in other applications such as collectable items bearing parts of a download code, wherein these parts have to be brought together to obtain a complete download code to acquire a downloadable digital content. An example thereof exists of collection cards that allow download of for instance a bonus digital content in the form of an upgrade of an online game, an additional item in an online game, an additional card in a virtual card collection, a unique animation, a free online song, film, e-book, e-comic strip, etc.

In a preferred embodiment of system according to the invention, said item that is obtained at said pay desk has dimensions allowing storage of large amounts thereof at said pay desk.

In an advantageous embodiment of a system according to the invention, said item that is obtained at said pay desk comprises an identification of a monetary value of said digital content.

For instance, in a space of a point-of-sale which is accessible for purchasers, for instance the store of the point-of-sale, download cards, foreseen with a product code identifying the product, can be provided in racks which can then be brought to a pay desk by the purchaser in order to be paid there, while at this pay desk, different series of seals are available, each series being representative for a different monetary value of the download content, such as a music collection having a monetary value of 10, 15 or 20 €, and each of these seals being provided with a unique part of a unique download code. When a purchaser than takes one of these download cards out of a rack and pays it at the pay desk, the vendor will then stick a seal with the appropriate monetary value of the digital content that is downloadable with the download card to the purchased download card. With this unique download code, in combination with the product code that was already printed on the download card, the purchaser now has a complete activated download code. This will allow the purchaser to obtain the complete download code through which the purchaser can download the corresponding digital content from the appropriate website.

A further disadvantage of the download card as described in WO 2009/032802 is that each of the associated digital media products has its own associated unique code. Consequently, each of these unique codes has to be manually inputted in a database or to be listed. This is a very time-consuming job.

In order to obtain a less time-consumable solution, in a preferred embodiment of a system according to the invention, one of said parts of said download code is representative for a type of digital content to be downloaded and the other of said parts of said download code is a unique part of said download code that in combination with said part representative for said type of digital product forms a unique download code.

In an advantageous embodiment of a system according to the invention, one or more of said parts of said download code is pre-activated. With pre-activation is meant that one or more parts of the download code are already activated before they are combined to form the complete download code.

In a first possible embodiment of a system according to the invention, said system comprises
- a first card comprising one of said parts of said download code, and
- a second card comprising said complementary part of said parts of said download code,
wherein said first and said second card are combinable to bring said parts of said download code together to obtain said complete download code.

More preferably, said second card is transparent or translucent or comprises a transparent or translucent zone bearing said second complementary part of said download code, wherein said second card is combinable with said first card to bring said parts of said download code together to obtain said complete download code.

In a second possible embodiment of a system according to the invention, said system comprises
- a first card comprising one of said parts of said download code; and
- a seal comprising said complementary part of said download code, wherein sticking said seal onto said first card brings said parts of said download code together to obtain said complete download code.

In a third possible embodiment of a system according to the invention, said system comprises
- a first card comprising one of said parts of said download code; and
- a print comprising said complementary part of said download code; wherein printing said print onto said first card brings said parts of said download code together to obtain said complete download code.

In a preferred embodiment of a system according to the invention, said download code is content-specific and is provided to allow acquisition of a particular digital content.

In a possible embodiment of a system according to the invention, said download code comprises a scannable download code, wherein said first item comprises a first part of said scannable download code and said second item comprises a second complementary part of said scannable download code, wherein said first and said second item are combinable to bring said first and said second part of said scannable download code together to obtain said scannable complete download code.

A scannable download code is a download code which can be read by a scanner such as a one- or two-dimensional barcode. A barcode is an optical machine-readable representation of data relating to the object to which it is attached). The first item then comprises a first part of this scannable download code, while the second item comprises a second complementary part of this scannable download code. This first and said second item are then combinable to bring the first and said second part of this scannable download code together to obtain the complete scannable download code.

In a more preferred embodiment of a system according to the invention, said download code comprises a QR-code, wherein said first item comprises a first part of said QR-code and said second item comprises a second complementary part of said QR-code, wherein said first and said second item are combinable to bring said first and said second part of said QR-code together to obtain said full QR-code.

A QR-code is a two-dimensional barcode. This QR-code consists of black modules (square dots) arranged in a square grid on a white background. Such a QR-code is read by an imaging device, such as a camera, and is formatted algorithmically by underlying software using Reed-Solomon error correction until the image is appropriately interpretable. The data is then extracted from patterns present in both horizontal and vertical components of the image.

The advantage of using a QR-code is that smartphone users can install an app with a QR-code scanner that can read a displayed code and convert it to a URL directing the smartphone's browser to the website of a company, store or product associated with that code providing specific information.

In a possible embodiment of a system according to the invention, said download code comprises a download code which can be keyed in manually into a designated website, wherein said first item comprises a first part of said alphanumeric download code and said second item comprises a second part of said alphanumeric download code together to obtain said alphanumeric complete download code.

Said download code can also exist out of a combination of a scannable download code and an alphanumeric download code as described above.

According to a second aspect, the invention provides in a method for obtaining a download code for downloading a digital content in a point-of-sale using a system according to the invention as described above, wherein said method comprises the steps of
- offering said first and said second item to said point-of-sale;
- locating one of said items with said first part of said download code in a space of said point-of-sale wherein said item is accessible by a purchaser and is purchasable at a pay desk of said point-of-sale;
- storing the other one of said items with said complementary second part of said download code at said pay desk;
- purchasing said item located in said space of said point-of-sale at said pay desk;
- obtaining said other one of said items with said complementary second part of said download code at said pay desk; and
- combining said items to bring said first and said second complementary second part of said download card together to obtain said complete download code.

### Brief Description of the Drawings

Fig. 1a illustrates a schematic view of a card having a first part of an alphanumeric code intended for allowing download of a digital content;

Fig. 1b illustrates a schematic view of a roll with several self-adhesive seals having a second part of this alphanumeric code intended for allowing download of the digital content;

Fig. 1c illustrates a schematic view of the combination of the first card having the first part of the alphanumeric code as shown in figure 1a and a self-adhesive seal having the second part of this alphanumeric code as shown in figure 1b resulting in the full alphanumeric code;

Fig. 1d illustrates a schematic view of the store of a point-of-sale being equipped with a deck of cards as shown in figure 1a being accessible to a purchaser and a pay desk at which the roll of self-adhesive seals as shown in figure 1b are stored;

Fig. 2a illustrates a schematic view of a card having a first part of a QR-code intended for allowing download of a digital content;

Fig. 2b illustrates a schematic view of a roll with several self-adhesive seals having a second part of the QR-code intended for allowing download of the digital content;

Fig. 2c illustrates a schematic view of the combination of the first card having the first part of the QR-code as shown in figure 2a and a self-adhesive seal having the second part of the QR-code as shown in figure 2b resulting

Fig. 3a illustrates a schematic view of a first card having a first part of a QR-code intended for allowing download of the digital content;

Fig. 3b illustrates a schematic view of a second card having a complementary second part of the QR-code intended for allowing download of a digital content, this second card being combinable with the first card as shown in figure 1; and

Fig. 3c illustrates a schematic view of the combination of the first card with the first part of the download code as shown in figure 3a and the second card with the complementary second part of the download code as shown in figure 3b resulting in the full QR-code.

### Detailed Description of Embodiment(s)

The system according to the invention for obtaining a download code for downloading a digital content comprises at least a first part of this download code being applied onto a first item, and a complementary second part of this download code being applied onto a second item. These items are combinable to bring the first and second part of the download code together to obtain the complete download code. In the exemplary embodiments of the system according to the invention as shown in the figures as described below, always two different items are provided each being provided with a part of the complete download code. This however does not take away the fact that the system can consist out of more than two items each bearing a part of a complete download code, each of these items having to be combined to obtain the complete download code. It is furthermore remarked that in the figures as shown below, the system uses one or more cards as the so-called 'items'. However, also any other combinable items that can be provided with parts of a download code are suitable to be used in a system according to the invention.

The digital content that is downloadable with a system according to the invention preferably is content-specific and is provided to allow acquisition of a particular digital content. This is however not a pre-requisite.

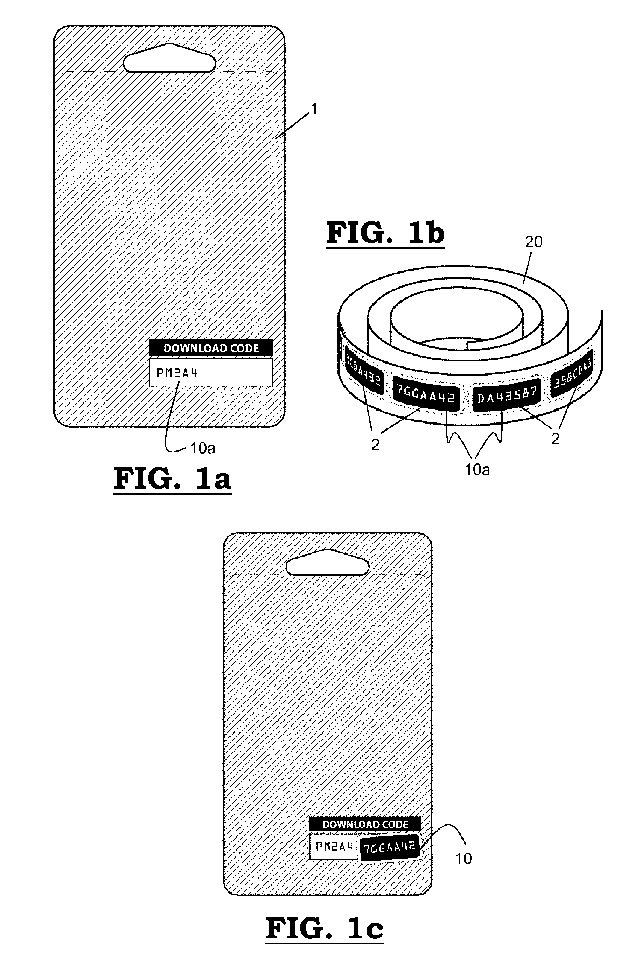

In figures 1a - 1c, an exemplary embodiment of a system according to the invention is shown that is well applicable in a point-of-sale (3). This system is provided with:
- a card (1) onto which a first part (10a) of an alphanumeric code (10) is printed (figure 1a), said first part (10a) preferably already being pre-activated before being purchased; and
- a roll of self-adhesive seals (2) onto which a second, complementary part (10b) of the alphanumeric code (10) is printed (figure 1b). This second, complementary part (10b) preferably is pre-activated at the pay desk.
This roll of self-adhesive seals (2) allows storage of a plurality of the complementary parts of the alphanumeric download code (10) at a pay desk (5) of a point-of-sale (3).

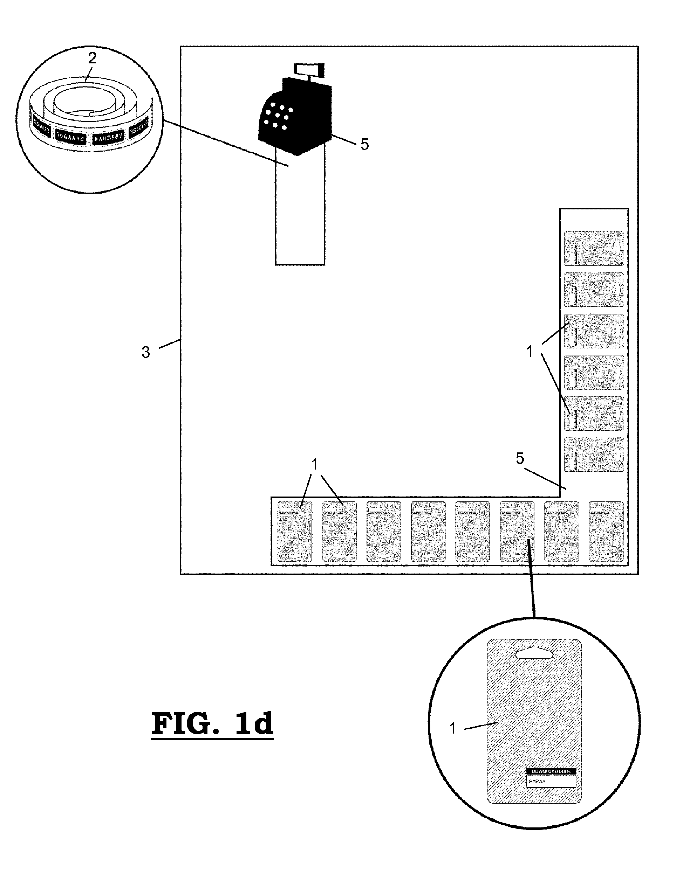

As can be seen in figure 1d, a stock of cards (1) as shown in figure 1a having a first part (10a) of the alphanumeric download code (10) are preferably stored in a space of the point-of-sale (3) which is easily accessible to a purchaser, for instance the store of a point-of-sale (3). These cards (1) for instance can be stored in a rack (4) located in this store. The roll of self-adhesive seals as shown in figure 1b having a plurality of complementary second parts (10b) of the alphanumeric download code (10) are stored at the pay desk (5). When a purchaser of the card (1) then arrives at the pay desk (5) and has paid for the digital content associated with the card (1), the vendor adheres a seal (2) of the roll (20) on the appropriate place on the card (1), through which the purchaser obtains the complete alphanumeric download code (10) allowing him / her to download the corresponding digital content from the appropriate download platform, for instance by keying in manually the activated alphanumeric download code (10) into the designated website.

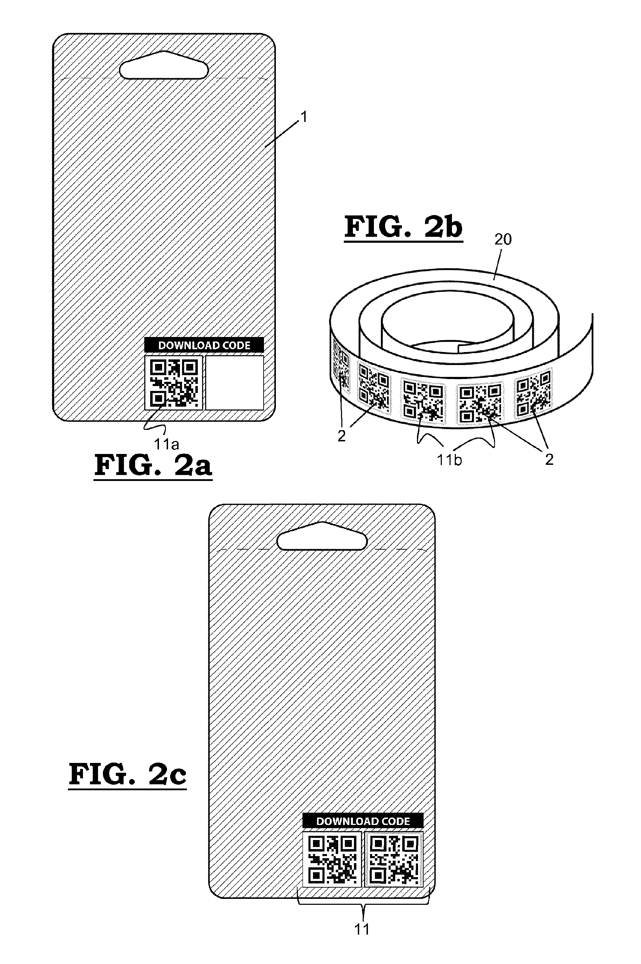

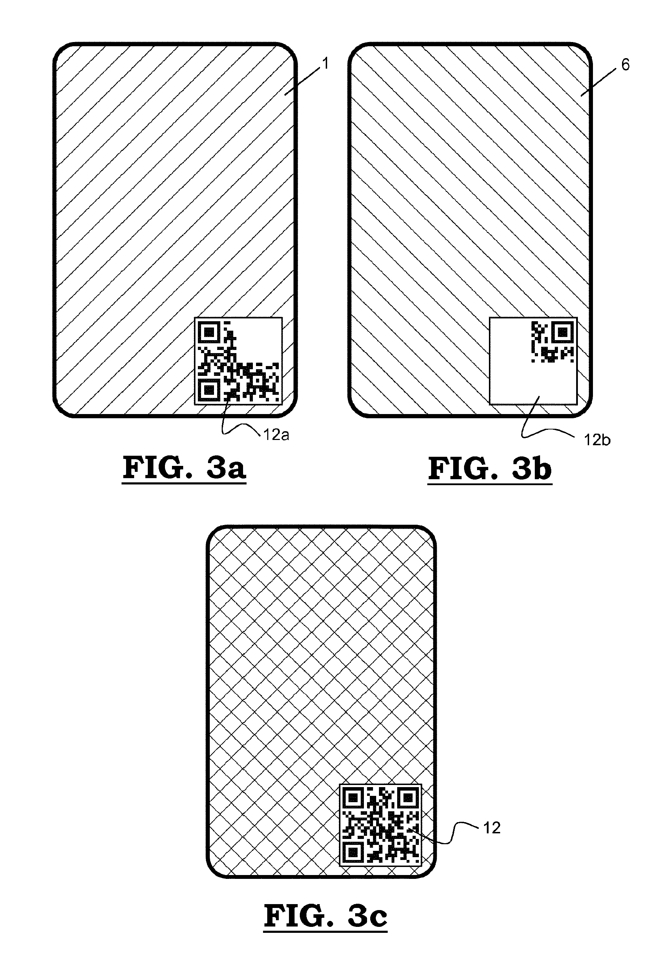

Instead of an alphanumeric code (10), the download code that is printed on the card (1) and on the self-adhesive seals (2) can also consist out of a QR-code that is scannable with any computer device that is suitable for doing so, for instance by scanning with a tablet pc or a smartphone that is provided with an app for scanning QR-codes. In the system as shown in figures 2a - 2c, the download code consists out of a first QR-code (11a) that is printed on the card (1) and a second QR-code (11b) that is printed on the seal (2). This first QR-code (11a) preferably already is pre-activated before being purchased and this second QR-code (11b) preferably is pre-activated at the pay desk. The complete activated download code (11) in this case is thus a double QR-code. It is also possible to provide a first part (12a) of a QR-code (12) (see figure 3a) on the card (1), and a second complementary part (12b) of this QR-code (12) (see figure 3b) on a self-adhesive seal (2), wherein after adhering the seal (2) on the card (1) on the appropriate place, a complete activated QR-code (12) is obtained enabling download of the associated digital content.

Another possibility instead of providing a roll (20) of seals (2) at the pay desk (5) of the point-of-sale (3) is to provide in a printing device (not shown on the figures) at the pay desk (5), or in the store of the point-of-sale (3), allowing the complementary part (10b, 11b, 12b) to be printed on the card (1).

The system (1) advantageously is arranged that the first part (10a, 11a, 12a) of the download code (10, 11, 12) is the same for each same type of digital content, for instance all cards (1) that are associated with a certain film or album of an artist have the same first part (10a, 11a, 12a) of the download code (10, 11, 12). The seal (2) that is adhered on the card (1) at the pay desk (5) of the point-of-sale (3) then can be provided with a unique complementary part (10b, 11b, 12b) of the download code (10, 11, 12). In this way, a unique download code (10, 11, 12) is obtained that is associated with a certain downloadable digital content.

Furthermore, it is preferable to provide the seals (2) that are stored at the pay desk (5) with an identification of the monetary value of said digital content. The seals (2) for instance can be indicated with the amount of the monetary value thereof, for instance when selling CD's, different seals (2) can be available having a monetary value of 10, 15 or 20 €. Another option is to give the seals (2) another colour depending of the monetary value thereof.

Still another possibility instead of providing seals (2) with the complementary part(s) (10b, 11b, 12b) of the download code (10, 11, 12) is to apply these complementary part(s) (10b, 11b, 12b) on a transparent or translucent card (6) or a card (6) having a transparent or translucent zone (not shown on the figures) onto which the complementary part (12b) of the QR-code (12) is applied. Such a system is shown in figures 3a - 3c. Since it is not very practical to store a stack of cards (6) at a pay desk (5) of a point-of-sale (3) because cards take more space than a roll (20) of seals (2), this system can be well applied in other applications such as in a system for collecting cards (1, 6) that when combined unlock digital content. An example thereof is that a first card (1) as shown in figure 3a having a first part (12a) of a QR-code (12) is located in one box of a certain toy (not shown on the figures), and a transparent second card (6) having a second part (12b) of the QR-code (12) is located in another box of a related toy (not shown on the figures). When the transparent card (6) is placed on the first card (1), the full QR-code (12) can be seen through the transparent card (6) allowing the collector of the cards (1, 6) to download a certain bonus digital content. This bonus digital content for instance can be in the form of an upgrade of an online game, an additional item in an online game, an additional card in a virtual card collection, a unique animation, a free online song, film, e-book, e-comic strip, etc. The first and second part (12a, 12b) of the QR-code (12) preferably are already pre-activated.

The cards (1, 6) may be formed out of paper, paperboard, derived timber products, composite materials, laminates, synthetic materials, etc.

The method for obtaining a download code (10, 11, 12) for downloading a digital content using a system as described above, comprises the following steps:
- offering said first and said second item (1, 2) to said point-of-sale (3);
- locating one of said items (1) with said first part (10a, 11a, 12a) of said download code (10, 11, 12) in a space of said point-of-sale (3) where said item (1) is accessible by a purchaser and is purchasable at a pay desk (5) of said point-of-sale (3);
- storing the other one of said items (2) with said complementary second part (10b, 11b, 12b) of said download code (10, 11, 12) at said pay desk;
- purchasing said item (1) located in said space of said point-of-sale (3) at said pay desk (5);
- obtaining said other one of said items (2) with said complementary second part (10b, 11b, 12b) of said download code (10, 11, 12) at said pay desk (5);
- combining said items (1, 2) to bring said first and complementary second part (10a, 11a, 12a; 10b, 11b, 12b) of said download code (10, 11, 12) together to obtain the complete download code.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system for obtaining a download code (10, 11, 12) for downloading a digital content,
**CHARACTERIZED IN THAT** said system comprises at least
- a first part (10a, 11a, 12a) of said download code (10, 11, 12) being applied onto a first item (1); and
- a complementary second part (10b, 11b, 12b) of said download code (10, 11, 12) being applied onto a second item (2, 6),
wherein said first and said second item (1, 2, 6) are combinable to bring said first and said second part (10a, 11a, 12a; 10b, 11b, 12b) of said download code (10, 11, 12) together to obtain said complete download code (10, 11, 12).

2. A system according to claim 1, **CHARACTERIZED IN THAT** at least one of said items (1, 2, 6) being provided with a part (10a, 11a, 12a or 10b, 11b, 12b) of said download code (10, 11, 12) is arranged to be accessed by a purchaser allowing it to be paid at a pay desk (5) of a point-of-sale (3), and one or more other items (1, 2, 6) being provided with the remaining part (10b, 11b, 12b or 10a, 11a, 12a) of said download code (10, 11, 12) are arranged to be obtained at said pay desk (5) allowing to combine said items (1, 2, 6) to bring all parts (10a, 11a, 12a; 10b, 11b, 12b) of said download code (10, 11, 12) together through which said purchaser obtains said complete download code (10, 11, 12).

3. A system according to claim 2, **CHARACTERIZED IN THAT** said item (1, 2, 6) that is obtained at said pay desk (5) has dimensions allowing storage of large amounts thereof at said pay desk (5).

4. A system according to claim 2 or 3, **CHARACTERIZED IN THAT** said item (1, 2, 6) that is obtained at said pay desk (5) comprises an identification of the monetary value of said digital content.

5. A system according to any one of claims 1 to 4, **CHARACTERIZED IN THAT** one of said parts (10a, 11a, 12a; 10b, 11b, 12b) of said download code (10, 11, 12) is representative for a type of digital content to be downloaded and the other of said parts (10a, 11a, 12a; 10b, 11b, 12b) of said download code (10, 11, 12) is a unique part of said download code (10, 11, 12) that in combination with said part (10a, 11a, 12a; 10b, 11b, 12b) representative for said type of digital product forms a unique download code (10, 11, 12).

6. A system according to any one of claims 1 to 5, **CHARACTERIZED IN THAT** one or more of said parts (10a, 11a, 12a; 10b, 11b, 12b) of said download code (10, 11, 12) are pre-activated.

7. A system according to any one of claims 1 to 6, **CHARACTERIZED IN THAT** said system comprises
- a first card comprising one of said parts (10a, 11a, 12a; 10b, 11b, 12b) of said download code (10, 11, 12); and
- a second card comprising said complementary part (10a, 11a, 12a; 10b, 11b, 12b) of said parts of said download code (10, 11, 12),
wherein said first and said second card (1, 6) are combinable to bring said parts (10a, 11a, 12a; 10b, 11b, 12b) of said download code (10, 11, 12) together to obtain said complete download code (10, 11, 12.

8. A system according to claim 7, **CHARACTERIZED IN THAT** said second card (6) is transparent or translucent or comprises a transparent or translucent zone bearing said second complementary part (10a, 11a, 12a; 10b, 11b, 12b) of said download code (10, 11, 12), wherein said second card (6) is combinable with said first card (1) to bring said parts (10a, 11a, 12a; 10b, 11b, 12b) of said download code (10, 11, 12) together to obtain said complete download code (10, 11, 12).

9. A system according to any one of claims 1 to 6, **CHARACTERIZED IN THAT** said system comprises
- a first card (1) comprising one of said parts (10a, 11a, 12a; 10b, 11b, 12b) of said download code; and
- a seal (2) comprising said complementary part (10a, 11a, 12a; 10b, 11b, 12b) of said download code (10, 11, 12) and which is adherable to said first card (1),
wherein adhering said seal (2) onto said first card (1) brings said parts (10a, 11a, 12a; 10b, 11b, 12b) of said download code (10, 11, 12) together to obtain said complete download code (10, 11, 12).

10. A system according to any one of claims 1 to 6, **CHARACTERIZED IN THAT** said system comprises
- a first card (1) comprising one of said parts (10a, 11a, 12a; 10b, 11b, 12b) of said download code (10, 11, 12); and
- a print comprising said complementary part (10a, 11a, 12a; 10b, 11b, 12b) of said download code (10, 11, 12),
wherein printing said print onto said first card (1) brings said parts (10a, 11a, 12a; 10b, 11b, 12b) of said download code (10, 11, 12) together to obtain said complete download code (10, 11, 12).

11. A system according to any one of claims 1 to 10, **CHARACTERISED IN THAT** said download code (10, 11, 12) is content-specific and is provided to allow acquisition of a particular digital content.

12. A system according to any one of claims 1 to 11, **CHARACTERIZED IN THAT** said download code comprises a scannable download code (11, 12), wherein said first item (1) comprises a first part (11a, 12a) of said scannable download code (11, 12) and said second item (2, 6) comprises a second complementary part (11b, 12b) of said scannable download code (11, 12), wherein said first and said second item (1, 2, 6) are combinable to bring said first and said second part (11a, 12a; 11b, 12b) of said scannable download code (11, 12) together to obtain said full scannable download code (11, 12).

13. A system according to claim 12, **CHARACTERIZED IN THAT** said download code comprises a QR-code (11, 12), wherein said first item t1) comprises a first part t11a, 12a) of said QR-code (11, 12) and said second item (2, 6) comprises a second complementary part (11b, 12b) of said QR-code (11, 12), wherein said first and said second item (1, 2, 6) are combinable to bring said first and said second part (11a, 12a; 11b, 12b) of said QR- code (11, 12) together to obtain said full QR-code (11, 12).

14. A system according to any one of claims 1 to 13, **CHARACTERIZED IN THAT** said download code comprises an alphanumeric download code (10) which is keyed in manually into a designated website, wherein said first item (1) comprises a first part (10a) of said alphanumeric download code (10) and said second item (2, 6) comprises a second part (10b) of said alphanumeric download code (10), wherein said first and said second item (1, 2, 6) are combinable to bring said first and said second part (10a, 10b) of said alphanumeric download code (10) together to obtain said full alphanumeric download code (10).

15. Method for obtaining a download code (10, 11, 12) in a point-of-sale (3), said download code (10, 11, 12) being adapted for downloading a digital content, wherein a system according to any one of the preceding claims is used, **CHARACTERIZED IN THAT** said method comprises the steps of
- offering said first and said second item (1, 2) to said point-of-sale (3);
- locating one of said items (1) with said first part (10a, 11a, 12a) of said download code (10, 11, 12) in a space of said point-of-sale (3) where said item (1) is accessible by a purchaser and is purchasable at a pay desk (5) of said point-of-sale (3);
- storing the other one of said items (2) with said complementary second part (10b, 11b, 12b) of said download code (10, 11, 12) at said pay desk;
- purchasing said item (1) located in said space of said point-of-sale (3) at said pay desk (5);
- obtaining said other one of said items (2) with said complementary second part (10b, 11b, 12b) of said download code (10, 11, 12) at said pay desk (5);
- combining said items (1, 2) to bring said first and complementary second part (10a, 11a, 12a; 10b, 11b, 12b) of said download code (10, 11, 12) together to obtain the complete download code (10, 11, 12).
